# EUROPÄISCHE PATENTANMELDUNG

(11) **EP 3 657 164 A1**
(43) Veröffentlichungstag der Anmeldung: **27.05.2020**
(21) Anmeldenummer: 18207976.4
(22) Anmeldetag: 23.11.2018
(51) Int. Cl.: G01N 31/22, G01N 21/78, G01N 21/77

(54) **VORRICHTUNG UND VERFAHREN ZUR DETEKTION VON SCHIMMELPILZBEFALL**

(71) Anmelder: FRAUNHOFER-GESELLSCHAFT zur Förderung der angewandten Forschung e.V., 80686 München (DE)
(72) Erfinder: BAUERSFELD, Marie-Luise, 79110 Freiburg (DE); TARANTIK, Karina, 79110 Freiburg (DE); PANNEK, Carolin, 79312 Emmendingen (DE); WÖLLENSTEIN, Jürgen, 79106 Freiburg (DE)
(74) Vertreter: Lemcke, Brommer & Partner Patentanwälte Partnerschaft mbB

(57) **Zusammenfassung**

Die Erfindung betrifft eine Vorrichtung zur Detektion von Schimmelpilzbefall, mit zumindest einem ersten Detektionsbereich mit einem ersten sensitiven Farbstoff und einem zweiten Detektionsbereich mit einem zu dem ersten Farbstoff verschiedenen zweiten sensitiven Farbstoff, wobei erster und zweiter Farbstoff jeweils in eine Trägermatrix eingebettet sind, der erste Farbstoff ausgebildet ist, seine Farbe abhängig von einer Zielgaskonzentration eines ersten Zielgases zu ändern und der zweite Farbstoff ausgebildet ist, seine Farbe abhängig von der Zielgaskonzentration eines zweiten, zu dem ersten unterschiedlichen Zielgases und/oder einer Änderung des pH-Wertes zu ändern. Die Erfindung betrifft weiterhin ein Verfahren zur Detektion von Schimmelpilzbefall.

## Beschreibung

Schimmelpilzspuren sind überall in der Umwelt vorhanden. Schimmelwachstum wird durch eine erhöhte Luftfeuchtigkeit und entsprechendes Nährstoffangebot begünstigt. Deutschlandweit sind mehr als 20 % der Privatwohnungen und -häuser mit Schimmel belastet. In Innenräumen erfolgt aufgrund zunehmender Dämmung, Baumängeln wie Kältebrücken oder falschem Lüftungsverhalten eine starke Vermehrung auf unterschiedlichen Oberflächen. Diese führt zu einer geänderten Schimmelpilzzusammensetzung und letztendlich zu einer veränderten Luftbelastung. Neben den baulichen Schäden sind gesundheitliche Auswirkungen auf den Menschen problematisch. Schimmelpilze führen zu Geruchsbelästigungen, verursachen Allergien und die entstehenden Mykotoxine (Stoffwechselprodukte) sowie Glukane (Zellbestandteile) wirken toxisch.

Es sind Messverfahren zur Detektion von Schimmelpilzbefall bekannt, welche auf der Ansaugung von Umgebungsluft und dadurch Sammlung von Sporen auf Agar- bzw. Nährböden oder präparierten Objektträgern basieren. Nach einer Inkubationszeit von typischerweise mehreren Tagen erfolgt eine Auszählung der ggf. gewachsenen Kolonien. Verfahren, die ausschließlich auf den Messungen von solchen MVOCs (Microbial Volatile Organic Compound) basieren, können zu Fehlinterpretationen führen, da nicht unterschieden wird, ob es sich um schimmelbedingte MVOCs (microbial volatile organic compounds) oder um VOCs von Reinigungsmitteln, Möbeln oder Kosmetika mit ähnlicher Zusammensetzung handelt.

Ebenso sind Verfahren zum Nachweis von Schimmel-Stoffwechselprodukten bekannt, bei welchen halbleitende Metalloxidsensoren oder analytische Gaschromatographen verwendet werden.

Aus EP 2 610 617 A1 ist eine Vorrichtung zum Erkennen einer Pilzbelastung in einem Innenraum bekannt, welche ein Vorkonzentrationsmodul, ein Trennmodul und ein dem Trennmodul nachgelagertes Erkennungsmodul mit einer Sensoranordnung umfasst.

Aus EP 1 574 836 A1 ist ein Analyse-Kit zum Schadstoffnachweis in Innenräumen bekannt, mit einem Absorber-Röhrchen zum Aufsetzen auf einen Staubsauger. Als Absorber kommen Materialien wie Aktivkohle, Nitrophenolhydrazin, Zeolithen, Silicagel und Polyurethan zur Anwendung. Auch hier erfolgt die Analyse der Schadstoffe im Labor per Gaschromatographie.

Die Analyse mittels der vorgenannten Methoden ist zeitintensiv und aufwendig, sodass hohe Kosten und insbesondere eine lange Wartezeit für den Benutzer entstehen.

Der Erfindung liegt daher die Aufgabe zugrunde, eine Vorrichtung und ein Verfahren zur Detektion von Schimmelpilzbefall zur Verfügung zu stellen, welche eine zeitnahe Auswertung ermöglichen, ohne dass aufwendige Laborgeräte und Analyseverfahren benötigt werden.

Gelöst ist diese Aufgabe durch eine Vorrichtung zur Detektion von Schimmelpilzbefall gemäß Anspruch 1, ein Verfahren zur Detektion von Schimmelpilzbefall gemäß Anspruch 14 sowie eine Verwendung von zumindest zwei unterschiedlich sensitiven Farbstoffen gemäß Anspruch 15. Vorteilhafte Ausgestaltungen finden sich in den abhängigen Unteransprüchen.

Die erfindungsgemäße Vorrichtung ist bevorzugt zur Durchführung des erfindungsgemäßen Verfahrens ausgebildet, insbesondere einer bevorzugten Ausführungsform hiervon. Das erfindungsgemäße Verfahren ist bevorzugt zur Durchführung mittels der erfindungsgemäßen Vorrichtung ausgebildet, insbesondere einer bevorzugten Ausführungsform hiervon.

Der vorliegenden Erfindung liegt die Erkenntnis zugrunde, dass eine zeitnahe und kostengünstige Detektion von Schimmelpilzbefall durch Verwendung eines sensitiven Farbstoffes möglich ist. Untersuchungen zeigten jedoch, dass für eine hinreichende Genauigkeit zumindest zwei separate Detektionsvorgänge durchzuführen sind: Der vorliegenden Erfindung liegt daher die Verwendung von zumindest zwei unterschiedlichen sensitiven Farbstoffen zur Detektion von Schimmelpilzbefall zugrunde:
Die erfindungsgemäße Vorrichtung zur Detektion von Schimmelpilzbefall weist zumindest einen ersten Detektionsbereich mit einem ersten sensitiven Farbstoff und einen zweiten Detektionsbereich mit einem zu dem ersten Farbstoff verschiedenen zweiten sensitiven Farbstoff auf. Erster und zweiter Farbstoff sind jeweils in eine Trägermatrix eingebettet.

Der erste Farbstoff ist ausgebildet, seine Farbe abhängig von einer Zielgaskonzentration eines ersten Zielgases zu ändern und der zweite Farbstoff ist ausgebildet, seine Farbe abhängig von der Zielgaskonzentration eines zweiten, zu dem ersten Zielgas unterschiedlichen Zielgases und/oder eine Änderung des pH-Wertes zu ändern.

Die Kombination der Detektion einer Zielgaskonzentration des ersten Zielgases mittels des ersten Farbstoffes mit der Detektion einer Zielgaskonzentration des zweiten Zielgases und/oder einer Änderung des pH-Wertes mittels des zweiten Farbstoffes ermöglicht eine hinreichend genaue Detektion von Schimmelpilzbefall und ist gegenüber den aus dem Stand der Technik bekannten Methoden zur Detektion von Schimmelpilzbefall erheblich unaufwendiger durchführbar. Insbesondere werden keine aufwendigen Apparaturen wie beispielsweise Gaschromatographen benötigt. Weiterhin ist kein Einsenden einer Probe oder eines Absorbers in ein Analyselabor notwendig, da eine Änderung der Farbe des ersten und des zweiten Farbstoffes mit einfachen Mitteln auch unmittelbar am Ort der Messung festgestellt werden kann.

Das erfindungsgemäße Verfahren zur Detektion von Schimmelpilzbefall weist folgende Verfahrensschritte auf:
In einem Verfahrensschritt A erfolgt ein Bereitstellen zumindest eines ersten Detektionsbereiches mit einem ersten sensitiven Farbstoff und eines zweiten Detektionsbereichs mit einem zu dem ersten Farbstoff verschiedenen zweiten sensitiven Farbstoff, wobei der erste Farbstoff ausgebildet ist, seine Farbe abhängig von einer Zielgaskonzentration eines ersten Zielgases zu ändern und der zweite Farbstoff ausgebildet ist, seine Farbe abhängig von der Zielgaskonzentration eines zweiten, zu dem ersten unterschiedlichen Zielgases und/oder einer Änderung des pH-Wertes zu ändern. In einem Verfahrensschritt B erfolgt eine Analyse einer Farbänderung des ersten und des zweiten Farbstoffes.

Hierdurch werden die zuvor zu der erfindungsgemäßen Vorrichtung genannten Vorteile erzielt.

Untersuchungen des Anmelders zeigten, dass zur Detektion von Schimmelpilzbefall die Wahl des ersten und zweiten Farbstoffs wie folgt vorteilhaft ist: In einer vorteilhaften Ausführungsform sind erster und zweiter Farbstoff zur Detektion einer Änderung von zwei verschiedenen Parametern aus der Gruppe
- Gaskonzentration Formaldehyd;
- Gaskonzentration Dimethylsulfid;
- Gaskonzentration Ethanol;
- pH-Wert
ausgebildet.

In dieser vorteilhaften Ausführungsform werden somit durch die zwei Farbstoffe zwei verschiedene der zuvor vier genannten Parameter detektiert.

Für die Detektion von Schimmelpilzspuren sowie deren Stoffwechselprodukte sind bestimmte Farbstoffe besonders geeignet. Vorteilhafterweise gehören erster und zweiter Farbstoff daher zwei unterschiedlichen der nachfolgenden Stoffgruppen an:
- gassensitive Farbstoffe aus der Gruppe der Naphthaline, insbesondere zur Detektion einer Änderung der Gaskonzentration von Formaldehyd;
- gassensitive Farbstoffe aus der Gruppe der Metallsalze, insbesondere zur Detektion einer Änderung der Gaskonzentration von Dimethylsulfid;
- gassensitive Farbstoffe aus der Gruppe der Übergangsmetallkomplexe, insbesondere zur Detektion einer Änderung der Gaskonzentration von Ethanol;
- pH-sensitive Farbstoffe, insbesondere zur Detektion einer Änderung des pH-Wertes des Farbstoffs.

Insbesondere die Wahl von erstem und zweitem Farbstoff gemäß der vorgenannten vorteilhaften Ausführungsformen ermöglicht eine hinreichend genaue und dennoch kostengünstige und zeitsparende Detektion von Schimmelpilzbefall.

In einer weiteren vorteilhaften Ausführungsform weist zumindest ein Detektionsbereich einen Nährboden für Schimmelpilz-Lebendkeime auf. Hierdurch ist somit zusätzlich eine Aussage über die Detektion speziell von Lebendkeimen möglich. Vorteilhafterweise weist der Detektionsbereich eine Agar-Schicht, bevorzugt eine DG18-Agar-Schicht und/oder eine Malzextrakt-Agar-Schicht auf, da diese sich besonders als Nährboden für Schimmelpilz-Lebendkeime eignen. Vorteilhafterweise ist dieser Detektionsbereich zur Detektion einer Änderung des pH-Wertes des Nährbodens ausgebildet, sodass in unaufwendiger Weise mittels einer Detektion einer Änderung des pH-Wertes das Vorliegen von Schimmelpilz-Lebendkeime detektiert werden kann.

In einer weiteren vorteilhaften Ausführungsform sind erster und/oder zweiter Detektionsbereich zur optischen Transmissionsmessung ausgebildet. Dies ermöglicht eine unaufwendige und dennoch fehlerunanfällige Detektion einer Farbänderung. Bevorzugt sind daher beide Detektionsbereiche zur optischen Transmissionsmessung ausgebildet. Insbesondere ist es vorteilhaft, dass der oder die zur optischen Transmissionsmessung ausgebildeten Detektionsbereiche eine optisch transparente Trägermatrix aufweisen. In dieser vorteilhaften Ausführungsform ist der Farbstoff somit in die optisch transparente Trägermatrix eingebettet, sodass in robuster und kostenunaufwendiger Weise eine optische Transmissionsmessung zur Detektion einer Farbänderung ermöglicht wird.

Vorteilhafterweise sind erster und/oder zweiter, insbesondere beide Farbstoffe, für eine Farbänderung im sichtbaren Wellenlängenbereich zur Detektion des jeweiligen Zielparameters ausgebildet. Hierdurch ist eine Farbänderung in unaufwendiger Weise möglich. Insbesondere kann in einer besonders kostengünstigen vorteilhaften Ausgestaltung die Farbänderung durch den Benutzer mittels Betrachten detektiert werden. Insbesondere ist es vorteilhaft, dass die Vorrichtung zusätzlich eine oder mehrere Farbskalen umfasst, welche dem Benutzer durch Farbvergleich ein Feststellen einer Farbänderung des Farbstoffes vereinfachen.

Vorteilhafterweise weist die Vorrichtung zumindest einen optischen Sensor zur Detektion einer Farbänderung des ersten und/oder des zweiten Farbstoffs, insbesondere zur Detektion einer Farbänderung beider Farbstoffe auf. Hierdurch ist eine automatische Auswertung insbesondere auch in Abwesenheit des Benutzers möglich. Weiterhin werden fehlerhafte Auswertungen durch eine falsche Interpretation einer Farbänderung durch den Benutzer vermieden.

Vorteilhafterweise weist die Vorrichtung für jeden der beiden Detektionsbereiche einen separaten optischen Sensor auf. Hierdurch kann für jeden Detektionsbereich der jeweils zugeordnete optische Sensor für die bei dem zugeordneten Detektionsbereich zu erwartende Farbänderung optimiert werden.

Der optische Sensor ist in einer bevorzugten Ausführungsform ausgebildet, eine Intensitätsänderung und/oder Änderung des Spektrums des von dem ersten und/oder zweiten Farbstoffs reflektierten und/oder transmittierten Lichts ausgebildet.

Der optische Sensor ist bevorzugt zur Spektralanalyse ausgebildet. Insbesondere ist der optische Sensor bevorzugt als Farbsensor, insbesondere einen mehrkanaligen Farbsensor, bevorzugt einen RGB-Farbsensor ausgebildet. Hierdurch wird in kostengünstiger und fehlerunanfälliger Weise eine Detektion einer Farbänderung ermöglicht, die wesentlich genauer ist als beispielsweise eine Auswertung lediglich basierend auf einer Betrachtung durch den Benutzer. Bevorzugt ist der optische Sensor zur Änderung des Spektrums des von dem ersten und/oder zweiten Farbstoffs reflektierten und/oder transmittierten Lichts ausgebildet.

In einer vorteilhaften Ausgestaltung ist für jeden Detektionsbereich jeweils ein optischer Sensor zur Analyse einer Farbänderung des jeweiligen Detektionsbereiches vorgesehen. Hierdurch ergibt sich der Vorteil, dass die Sensoren auf die jeweilige Farbänderung des Detektionsbereichs abgestimmt werden können und für jeden Detektionsbereich separate Messsignale vorliegen.

In einer weiteren vorteilhaften Ausführungsform ist der optische Sensor derart ausgebildet und angeordnet, um eine Farbänderung sowohl des ersten, als auch des zweiten Detektionsbereiches zu detektieren. Insbesondere ist der optische Detektor vorteilhafterweise derart ausgebildet und angeordnet, dass transmittiertes und/oder reflektiertes Licht von dem ersten und dem zweiten Detektionsbereich auf eine Detektionsfläche des Detektors fällt. In diesem Fall ist es insbesondere vorteilhaft, dass die Farbänderung im ersten Detektionsbereich in einem anderen Wellenlängenbereich erfolgt als die Farbänderung in dem zweiten Detektionsbereich und der Sensor zur spektralen Differenzierung ausgebildet ist, so dass anhand der Messsignale des Detektors zwischen einer Farbänderung im ersten Detektionsbereich und einer Farbänderung im zweiten Detektionsbereich unterschieden werden kann.

Die Messsignale eines Sensors können durch Lichtverhältnisse oder durch eine Veränderung der Eigenschaften der optisch transparenten Materialien und/oder des Sensors durch äußere Einflüsse wie etwa Temperatur und Feuchtigkeit beeinflusst werden. In einer vorteilhaften Ausführungsform weist die Vorrichtung daher zumindest einen Referenzbereich auf, welcher derart angeordnet und mit dem optischen Sensor zusammenwirkend ausgebildet ist, dass den Referenzbereich durchdringende Lichtstrahlen und/oder von dem Referenzbereich reflektierte Lichtstrahlen auf den optischen Sensor auftreffen. Hierdurch ist somit eine Kalibrierung oder zumindest eine Fehlerkorrektur bei Auswerten der Messdaten des optischen Sensors möglich.

Es liegt im Rahmen der Erfindung, dass die Referenzmessung erfolgt, während der Lichtweg über den Farbstoff zu dem Sensor blockiert ist. Dies kann dadurch erfolgen, dass der Benutzer während der Referenzmessung die Messbereiche abdeckt, insbesondere mit einer Referenz-Abdeckplatte der erfindungsgemäßen Vorrichtung abdeckt. Ebenso liegt es im Rahmen der Erfindung, dass in einer alternativen Ausführungsform gleichzeitig Lichtstrahlen einerseits über den Referenzbereich und andererseits über den Detektionsbereich auf den Sensor auftreffen.

Der Referenzbereich weist vorteilhafterweise keinen Farbstoff oder einen nichtsensitiven Farbstoff, insbesondere einen nicht auf eine Änderung der Gaskonzentration des Zielgases und/oder nicht auf eine pH-Wertänderung sensitiven Farbstoff auf. Hierdurch wird eine Kalibrierung oder zumindest Fehlerkorrektur unabhängig von einem Auftreffen von Schimmelpilzspuren auf den Referenzbereich ermöglicht. Insbesondere ist es vorteilhaft, dass der Referenzbereich die gleiche Trägermatrix wie zumindest einer der Detektionsbereiche aufweist. Hierdurch ist ein konstruktiv einfacher Aufbau gegeben.

In einer weiteren vorteilhaften Ausführungsform weist die Vorrichtung zumindest einen Feuchtesensor, insbesondere einen Feuchtedetektionsbereich mit einem feuchtesensitiven Farbstoff und/oder zumindest einen Temperatursensor, insbesondere einen Temperaturdetektionsbereich mit einem temperatursensitiven Farbstoff auf.

Die Kombination der Messergebnisse von erstem und zweitem Farbstoff mit einer Feuchtemessung und/oder mit einer Temperaturmessung, insbesondere sowohl mit einer Feuchtemessung als auch mit einer Temperaturmessung, ermöglicht eine höhere Präzision bei der Detektion des Schimmelpilzbefalls.

In einer besonders benutzerfreundlichen Ausführungsform ist die Vorrichtung zur automatisierten Auswertung ausgebildet:
Vorteilhafterweise weist die Vorrichtung eine Grundeinheit auf, mit dem zumindest einen optischen Sensor und mit einer Auswerteeinheit sowie bevorzugt mit einer Energiequelle zumindest für die Auswerteeinheit. Die Auswerteeinheit ist mit dem optischen Sensor zur Auswertung von Messdaten des optischen Sensors, insbesondere zur Detektion eines Schimmelpilzbefalls, zusammenwirkend ausgebildet.

Die Vorrichtung weist in dieser vorteilhaften Ausführungsform weiterhin eine Detektionseinheit mit zumindest dem ersten und dem zweiten Detektionsbereich auf, wobei die Detektionseinheit lösbar an der Grundeinheit anordenbar ist. Insbesondere ist die Detektionseinheit bevorzugt mittels zumindest eines Befestigungselementes, bevorzugt einer Nut und/oder eines Rastelements, lösbar an der Grundeinheit anordenbar.

Hierdurch ergibt sich der Vorteil, dass durch Austausch der Detektionseinheit die Grundeinheit wiederverwendet werden kann. Hierdurch wird zur Durchführung mehrerer Messungen eine erhebliche Kostenersparnis erzielt, da bei Verbrauch oder Fehlfunktion der Detektionseinheit lediglich diese ausgetauscht werden muss. Dies ist insbesondere vorteilhaft, da typischerweise der optische Sensor sowie die Auswerteeinheit für eine sehr große Anzahl von Auswertungen verwendet werden können, wobei die Detektionseinheit, insbesondere die Farbstoffe bereits nach einer oder zumindest nach einer wesentlich geringeren Anzahl von Messungen ausgetauscht werden sollten.

Grundsätzlich liegt die Verwendung von sensitiven Farbstoffen mit irreversibler Farbänderung im Rahmen der Erfindung. Besonders vorteilhaft ist jedoch die Verwendung von sensitiven Farbstoffen mit reversibler Farbänderung, um eine Verwendung für mehrere Messungen zu ermöglichen.

Insbesondere ist es vorteilhaft, die sensitiven Farbstoffe mit irreversibler Farbänderung vorzusehen, so dass das Messergebnis dauerhaft auslesbar ist.

Vorteilhafterweise weist die Vorrichtung eine Anzeigeeinheit auf, welche mit der Auswerteeinheit zusammenliegend ausgebildet ist, um ein Auswerteergebnis der Auswerteeinheit anzuzeigen. In kostensparender Weise kann die Anzeigeeinheit zumindest ein optisches Leuchtmittel aufweisen. Besonders kostensparende Ausgestaltungen werden durch die Verwendung von lediglich einem oder von zwei optischen Leuchtmitteln erzielt. Insbesondere ist es kostensparend, eine oder mehrere Dioden als optisches Leuchtmittel zu verwenden.

Eine besonders einfache und kostengünstige Ausgestaltung wird durch die Verwendung von zwei optischen Leuchtmitteln erzielt, welche mit der Auswerteeinheit verbunden sind. Die Auswerteeinheit ist derart ausgebildet, dass bei Detektion von Schimmelpilzbefall das eine, hingegen bei Ausbleiben eines solchen Detektionsergebnisses das andere Leuchtmittel leuchtet. Eine besonders benutzerfreundliche Ausgestaltung ergibt sich durch die Verwendung eines roten Leuchtmittels zur Anzeige eines detektierten Schimmelpilzbefalls und eines grünen Leuchtmittels zur Anzeige, dass kein Schimmelpilzbefall detektiert wurde.

In einer vorteilhaften Ausführungsform ist die erfindungsgemäße Vorrichtung dazu ausgebildet, mittels des zumindest eines optischen Sensors unter Verwendung des Umgebungslichts die Messung durchzuführen. Hierdurch ergibt sich der Vorteil, dass keine zusätzliche Lichtquelle erforderlich ist.

In einer alternativen vorteilhaften Ausgestaltung weist die erfindungsgemäße Vorrichtung zusätzlich zumindest eine Messlichtquelle, insbesondere eine Leuchtdiode, auf, welche derart angeordnet ist, dass von der Messlichtquelle erzeugtes Messlicht auf die Detektionsbereiche und nach Transmission und/oder Reflexion an den Detektionsbereichen auf den oder die optischen Sensoren auftrifft, so dass eine Durchführung der Messung mittels des Lichts der Messlichtquelle erfolgt. Hierdurch ergibt sich eine vorteilhafte Unabhängigkeit von Umgebungslicht und insbesondere kann die Messgenauigkeit erhöht werden, da definierte und vorbekannte Beleuchtungsverhältnisse vorliegen.

Eine weitere Erhöhung der Detektionsgenauigkeit wird in einer vorteilhaften Ausgestaltung dadurch erzielt, dass die Vorrichtung mehr als zwei Detektionsbereiche mit jeweils einem in eine Trägermatrix eingebetteten sensitiven Farbstoff aufweist, wobei die sensitiven Farbstoffe teilweise unterschiedlich sind. Insbesondere ist es vorteilhaft, dass die Vorrichtung zumindest vier Detektionsbereiche mit teilweise unterschiedlichen Farbstoffen aufweist.

Besonders bevorzugt weist die Vorrichtung zumindest jeweils einen Farbstoff zur Detektion der Gaskonzentration von Formaldehyd, von Dimethylsulfid, von Ethanol und der Änderung des pH-Wertes auf.

Die eingangs erwähnte Aufgabe ist somit insbesondere durch die Verwendung von zumindest zwei unterschiedlichen sensitiven Farbstoffen zur Detektion von Schimmelpilzbefall gelöst.

In einer besonders vorteilhaften Ausgestaltung ist die Vorrichtung als Gassensorsystem ausgebildet, mit einem gassensitiven Etikett, insbesondere Einwegetikett, als Detektionseinheit sowie einer Grundeinheit, welche mehrere Farbsensoren, insbesondere mehrkanalige Farbsensoren, eine oder mehrere Mikrooptiken zur Leitung des die Detektionsbereiche des Etiketts durchdringenden Lichtes zu jeweils einem zugeordneten Farbsensor sowie eine als elektronische Recheneinheit ausgebildete Auswerteeinheit aufweist. Vorteilhafterweise weist das Gesamtsystem eine Grundfläche auf, die kleiner als DIN A5 (148 mm x 210 mm) ist. Das zuvor beschriebene Etikett weist damit mehrere Detektionsbereiche auf, die jeweils als kolorimetrische Sensoren ausgebildet sind, in denen wie zuvor beschrieben die Farbe des jeweiligen Detektionsbereiches sich selektiv in Abhängigkeit des jeweils zugeordneten Zielgases und/oder pH-Wertes ändert. Die Farbstoffe sind jeweils in eine Trägermatrix, insbesondere ein Polymer, integriert.

Vorteilhafterweise werden die Detektionsbereiche durch Aufbringen planarer Schichten auf einen transparenten Träger, insbesondere Glas oder polymerbasierte Substrate, bevorzugt PMMA oder Folien, hergestellt. Wie zuvor beschrieben, werden weiterhin auf dem transparenten Träger separate Referenzflächen, beispielsweise nur mit der Matrix ohne einen sensitiven Farbstoff oder mit einem inaktiven Farbstoff, beschichtet.

Die Auswertung erfolgt bevorzugt derart, dass dann ein Schimmelpilzbefall detektiert wird, wenn bei allen Detektionsbereichen eine zuvor definierte Farbänderung erfolgt.

Weitere vorteilhafte Merkmale und Ausführungsformen werden im Folgenden anhand von einem Ausführungsbeispiel und den Figuren erläutert. Dabei zeigt:
- Figur 1: die Grundeinheit eines ersten Ausführungsbeispiels einer erfindungsgemäßen Vorrichtung;
- Figur 2: die Detektionseinheit des ersten Ausführungsbeispiels,
- Figur 3: eine Schnittdarstellung gemäß Linie A in Figur 1 und senkrecht zur Zeichenfläche bei auf der Grundeinheit angeordneter Detektionseinheit und
- Figur 4: eine Grundeinheit eines zweiten Ausführungsbeispiels einer erfindungsgemäßen Vorrichtung.

Die Figuren zeigen schematische, nicht maßstabsgetreue Darstellungen. Gleiche Bezugszeichen in den Figuren bezeichnen gleiche oder gleich wirkende Elemente.

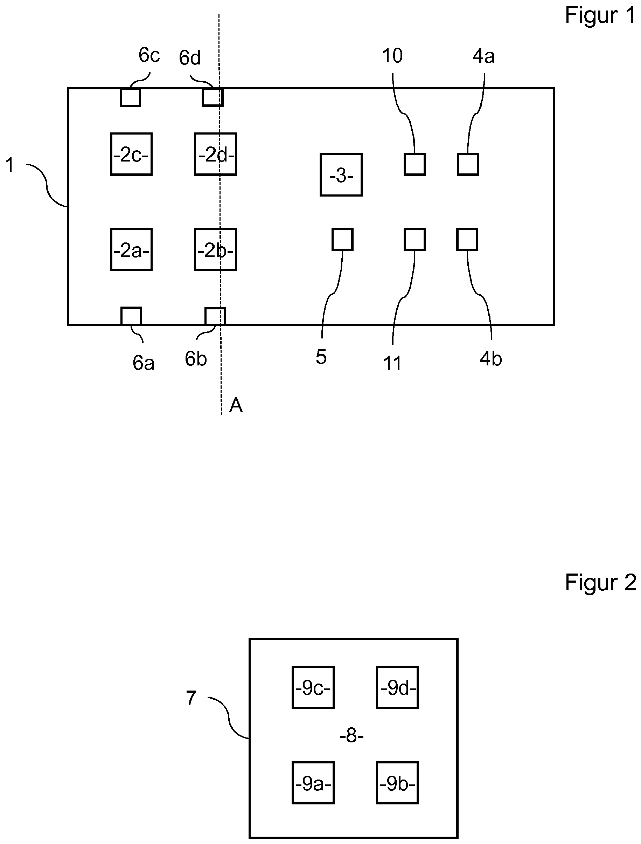

In Figur 1 ist eine Grundeinheit 1 eines ersten Ausführungsbeispiels einer erfindungsgemäßen Vorrichtung zu Detektion von Schimmelpilzbefall in Draufsicht von oben dargestellt.

Die Grundeinheit weist vier optische Detektoren 2a, 2b, 2c und 2d auf. Jeder optische Detektor ist als RGB-Farbsensor ausgebildet.

Die Grundeinheit 1 weist weiterhin eine Auswerteeinheit 3 auf. Diese ist als einfache Rechnereinheit ausgebildet, mit einem Rechenprozessor und einer Speichereinheit, insbesondere für ein Auswerteprogramm. Die Grundeinheit 1 weist weiterhin zwei Leuchtmittel auf: eine grüne LED 4a und eine rote LED 4b.

Die Auswerteeinheit 3 ist mit den optischen Detektoren 2a bis 2d verbunden, um deren Messwerte auszulösen. Weiterhin ist die Auswerteeinheit 3 mit den Leuchtmitteln 4a und 4b verbunden, um mittels der Leuchtmittel ein Ergebnis der Auswertung anzuzeigen. Die Grundeinheit 1 weist weiterhin eine als Batterie ausgebildete Energiequelle 5 auf, welche mit der Auswerteeinheit zur Energieversorgung verbunden ist.

Weiterhin weist die Grundeinheit 1 vier Rastnasen 6a, 6b, 6c und 6d auf, um eine Detektionseinheit mittels der Rastnasen an der Grundeinheit 1 über den optischen Detektoren 2a bis 2d anzuordnen: In Figur 2 ist eine Detektionseinheit 7 des ersten Ausführungsbeispiels in Draufsicht von oben dargestellt. Die Detektionseinheit 7 weist einen transparenten optischen Träger 8 auf, welcher aus Glas ausgebildet ist. Auf dem optischen Träger 8 sind vier

Detektionsbereiche 9a, 9b, 9c und 9d ausgebildet, bei denen jeweils in einem Polymer als Trägermatrix folgende sensitiven Farbstoffe eingebettet sind:

| **Detektions bereich** | **sensitiver Farbstoff** | **detektierter Parameter** | **Farbumschlag** |
|---|---|---|---|
| 9a | Naphthalin-Derivat, z.B. Chromotropsäure | Formaldehyd | farblos → rotviolett |
| 9b | Metallsalz, z.B. Kaliumpermanganat | Dimethylsulfid | violett → gelbbraun |
| 9c | Metalloxide, z.B. Cr(Vl)-oxid | Ethanol | braun → schwarz |
| 9d | DG18-Agar mit pH-Indikator, z.B. Bromthymolblau | pH-Wert | gelb → blau |

Jeder dieser Farbstoffe kann somit seine Farbe abhängig von der Zielgaskonzentration des in der Tabelle angegebenen Zielgases bzw. des pH-Wertes ändern.

Die Detektionseinheit 7 ist als Einwegetikett ausgebildet und kann somit nach erfolgter Messung ausgetauscht werden. Die Grundeinheit 1 wird hingegen mit dem neuen Einwegetikett wiederverwendet.

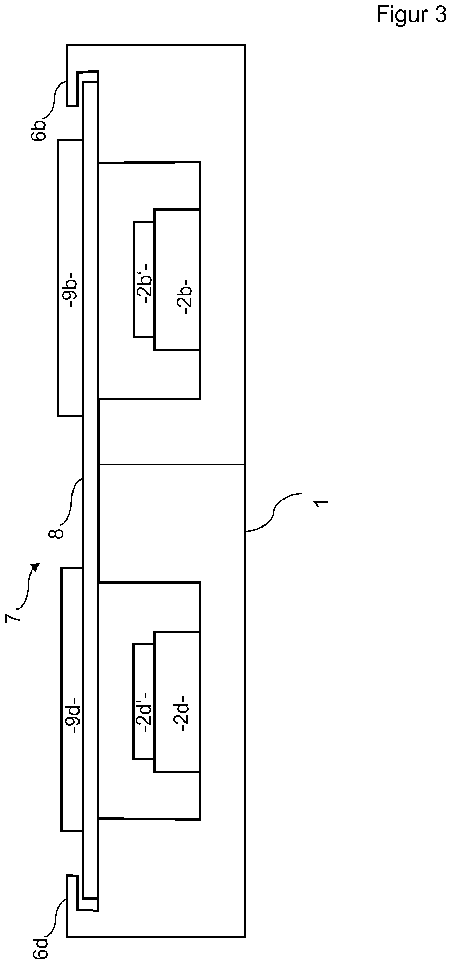

Zur Durchführung einer Messung wird die Detektionseinheit 7 mittels der Rastnasen 6a - 6d an der Grundeinheit 1 angeordnet, indem die Detektionseinheit 7 eingeklipst oder eingeschoben wird. In Figur 3 ist ein Schnitt entlang der Linie A in Figur 1 und senkrecht zur Zeichenebene in Figur 1 bei an der Grundeinheit 1 angeordneter Detektionseinheit 7 dargestellt. Die Detektionsbereiche 9b und 9d sind entsprechend über den optischen Detektoren 2b und 2d angeordnet. In gleicher Weise sind entsprechend die Detektionsbereiche 9a und 9c über den optischen Detektoren 2a und 2c angeordnet.

Fällt nun Umgebungslicht auf die Detektionsbereiche 9a bis 9d so durchdringt das Licht die Detektionsbereiche sowie den optischen Träger 8 und trifft auf die optischen Detektoren 2a bis 2d auf. Zur Verstärkung des optischen Signals weisen die optischen Detektoren 2a bis 2d an der der Detektionseinheit 7 zugewandten Seite jeweils eine Mikrooptik mit Sammellinsen auf. Exemplarisch sind in Figur 3 die Mikrooptik 2d' des optischen Detektors 2d und 2b' des optischen Detektors 2b dargestellt.

Die Messsignale der optischen Detektoren 2a bis 2d werden von der Auswerteeinheit 3 ausgelesen und hinsichtlich einer Farbänderung bewertet. Die Auswertung beginnt, sobald eine Energiequelle 5, vorliegend eine Batterie in die Grundeinheit 1 eingesetzt wird. In einer alternativen Ausgestaltung ist ein Startknopf zum Starten der Auswertung vorgesehen.

In dem vorliegenden Ausführungsbeispiel wird ein Befall von Schimmelpilz detektiert, wenn mindestens zwei der Detektionsbereiche ansprechen.

Abhängig von dem Auswerteergebnis wird mittels der Auswerteeinheit 3 die rote LED 4b bei Schimmelpilzbefall und die grüne LED 4a bei nicht detektiertem Schimmelpilzbefall zum Leuchten gebracht.

In einem erweiterten Ausführungsbeispiel weist die Grundeinheit 1 zusätzlich einen Feuchtesensor 10 und einen Temperatursensor 11 auf, die ebenfalls mit der Auswerteeinheit 3 verbunden sind. Mittels der Auswerteeinheit werden in diesem Ausführungsbeispiel somit nicht nur etwaige Farbänderungen der Detektionsbereiche 9a bis 9d gemessen, sondern auch zusätzlich ein Feuchtewert mittels des Feuchtesensors 10 und ein Temperaturwert mittels des Temperatursensors 11.

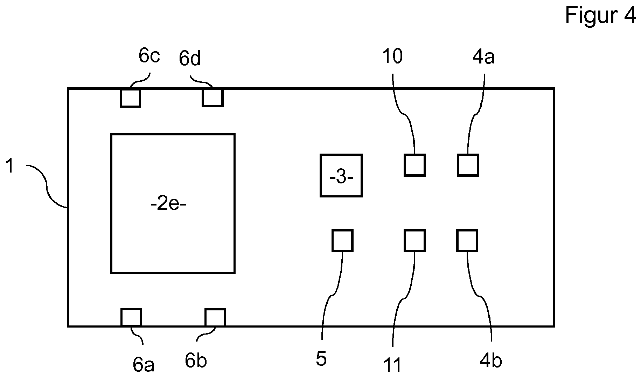

In Figur 4 ist die Grundeinheit eines zweiten Ausführungsbeispiels einer erfindungsgemäßen Vorrichtung dargestellt. Die Grundeinheit weist bis auf wenige Änderungen den gleichen Aufbau wie das zu Figur 1 beschriebene erste Ausführungsbeispiel auf. Zur Vermeidung von Wiederholungen wird nachfolgend daher lediglich auf die wesentlichen Unterschiede eingegangen:
Die Grundeinheit des zweiten Ausführungsbeispiels weist lediglich einen optischen Detektor 2e auf. Der optische Detektor 2e weist eine große Detektionsfläche auf, welche die gesamte Fläche umfasst, die von den Detektionsflächen der optischen Detektoren 2a bis 2d des ersten Ausführungsbeispiels abgedeckt wird. Auch die Grundeinheit des zweiten Ausführungsbeispiels ist zur Verwendung mit einer Detektionseinheit 7 gemäß Figur 2 ausgebildet.

Wird die Detektionseinheit 7 mittels der Rastnasen 6a bis 6d auf der Grundeinheit 1 angeordnet, so liegen die Detektionsbereiche 9a bis 9d alle über dem großflächigen Detektionsbereich des optischen Detektors 2e, so dass durch die Detektionsbereiche 9a bis 9d durchtretendes Licht jeweils auf den optischen Detektor 2e auftrifft.

Der optische Detektor 2e ist als spektral auflösender RGB-Sensor ausgebildet. Die Detektionsbereiche 9a bis 9d sind derart ausgebildet, dass eine Farbänderung jeweils in unterschiedlichen Spektralbereichen erfolgt.

Durch die Ausgestaltung des optischen Detektors 2e als spektralauflösender Detektor kann somit für jeden Detektionsbereich 9a bis 9d separat ein Farbumschlag anhand der Messdaten des Sensors ermittelt werden, da aufgrund der spektralen Auflösung eine Änderung des Spektrums dem jeweiligen Spektralbereich des Detektionsbereichs zugeordnet werden kann.

In diesem zweiten Ausführungsbeispiel ist somit lediglich ein optischer Detektor notwendig und dennoch kann eine separate Auswertung von Farbumschlägen der vier Detektionsbereiche 9a bis 9d erfolgen.

### Bezugszeichenliste

| | |
|---|---|
| Grundeinheit | 1 |
| Optischer Detektor | 2a, 2b, 2c, 2d, 2e |
| Auswerteeinheit | 3 |
| Grüne LED | 4a |
| Rote LED | 4b |
| Energiequelle | 5 |
| Rastnasen | 6a, 6b, 6c, 6d |
| Detektionseinheit | 7 |
| Optischer Träger | 8 |
| Detektionsbereiche | 9a, 9b, 9c, 9d |
| Feuchtesensor | 10 |
| Temperatursensor | 11 |

## Patentansprüche

1. Vorrichtung zur Detektion von Schimmelpilzbefall,
mit zumindest einem ersten Detektionsbereich (9a, 9b, 9c, 9d) mit einem ersten sensitiven Farbstoff und einem zweiten Detektionsbereich (9a, 9b, 9c, 9d) mit einem zu dem ersten Farbstoff verschiedenen zweiten sensitiven Farbstoff,
wobei erster und zweiter Farbstoff jeweils in eine Trägermatrix eingebettet sind, der erste Farbstoff ausgebildet ist, seine Farbe abhängig von einer Zielgaskonzentration eines ersten Zielgases zu ändern und der zweite Farbstoff ausgebildet ist, seine Farbe abhängig von der Zielgaskonzentration eines zweiten, zu dem ersten unterschiedlichen Zielgases und/oder einer Änderung des pH-Wertes zu ändern.

2. Vorrichtung nach Anspruch 1,
**dadurch gekennzeichnet,**
**dass** erster und zweiter Farbstoff zur Detektion einer Änderung von zwei verschiedenen Parametern aus der Gruppe
- Gaskonzentration Formaldehyd;
- Gaskonzentration Dimethylsulfid;
- Gaskonzentration Ethanol;
- pH-Wert
ausgebildet sind, insbesondere,
**dass** erster und zweiter Farbstoff zwei unterschiedlichen aus den nachfolgenden Stoffgruppen angehören:
- gassensitive Farbstoffe aus der Gruppe der Naphthaline, insbesondere zur Detektion einer Änderung der Gaskonzentration von Formaldehyd;
- gassensitive Farbstoffe aus der Gruppe der Metallsalze, insbesondere zur Detektion einer Änderung der Gaskonzentration von Dimethylsulfid;
- gassensitive Farbstoffe aus der Gruppe der Übergangsmetallkomplexe, insbesondere zur Detektion einer Änderung der Gaskonzentration von Ethanol;
- pH-sensitive Farbstoffe, insbesondere zur Detektion einer Änderung des pH-Wertes des Farbstoffs.

3. Vorrichtung nach einem der vorangegangenen Ansprüchen,
**dadurch gekennzeichnet,**
**dass** zumindest ein Detektionsbereich (9a, 9b, 9c, 9d) einen Nährboden für Schimmelpilz-Lebendkeime aufweist, insbesondere eine Agar-Schicht, bevorzugt eine DG18-Agar-Schicht und/oder Malzextrakt-Agar-Schicht aufweist, bevorzugt,
**dass** dieser Detektionsbereich zur Detektion einer Änderung des pH-Wertes mit einem pH-Wert-sensitiven Farbstoff eingefärbt ist.

4. Vorrichtung nach einem der vorangegangenen Ansprüche,
**dadurch gekennzeichnet,**
**dass** erster und/oder zweiter Detektionsbereich (9a, 9b, 9c, 9d), bevorzugt beide Detektionsbereiche (9a, 9b, 9c, 9d) zur optischen Transmissionsmessung ausgebildet sind, insbesondere eine optisch transparente Trägermatrix aufweisen.

5. Vorrichtung nach einem der vorangegangenen Ansprüche,
**dadurch gekennzeichnet,**
**dass** die Vorrichtung zumindest einen optischen Sensor zur Detektion einer Farbänderung des ersten und/oder zweiten Farbstoffs aufweist.

6. Vorrichtung nach einem der vorangegangenen Ansprüche,
**dadurch gekennzeichnet,**
**dass** die Vorrichtung für jeden der beiden Detektionsbereiche (9a, 9b, 9c, 9d) einen separaten optischen Sensor aufweist.

7. Vorrichtung nach einem der vorangegangenen Ansprüche 5 bis 6,
**dadurch gekennzeichnet,**
**dass** der optische Sensor zur Spektralanalyse ausgebildet ist, insbesondere als mehrkanaliger Farbsensor, bevorzugt als RGB-Farbsensor ausgebildet ist.

8. Vorrichtung nach einem der vorangegangenen Ansprüche 5 bis 7,
**dadurch gekennzeichnet**
**dass** die Vorrichtung zumindest einen Referenzbereich aufweist, welcher derart angeordnet und mit dem optischen Sensor zusammenwirkend ausgebildet ist, dass den Referenzbereich durchdringende Lichtstrahlen auf den optischen Sensor auftreffen.

9. Vorrichtung nach Anspruch 8,
**dadurch gekennzeichnet,**
**dass** der Referenzbereich keinen Farbstoff oder einen nicht sensitiven Farbstoff aufweist, insbesondere, dass der Referenzbereich die gleiche Trägermatrix wie zumindest einer der Detektionsbereiche (9a, 9b, 9c, 9d) aufweist.

10. Vorrichtung nach einem der vorangegangen Ansprüche,
**dadurch gekennzeichnet,**
**dass** die Vorrichtung zumindest einen Feuchtesensor (10), insbesondere einen Feuchtedetektionsbereich mit einem feuchtesensitiven Farbstoff und/oder zumindest einen Temperatursensor (11), insbesondere einen Temperaturdetektionsbereich mit einem temperatursensitiven Farbstoff aufweist.

11. Vorrichtung nach einem der vorangegangenen Ansprüche 5 bis 10,
**dadurch gekennzeichnet,**
**dass** die Vorrichtung eine Grundeinheit (1) aufweist, mit dem zumindest einen optischen Sensor und mit einer Auswerteeinheit (3) und bevorzugt mit einer Energiequelle (5) für zumindest die Auswerteeinheit (3), dass die Auswerteeinheit (3) mit dem optischen Sensor zur Auswertung von Messdaten des optischen Sensors, insbesondere zur Detektion eines Schimmelpilzbefalls zusammenwirkend ausgebildet ist,
**dass** die Vorrichtung eine Detektionseinheit (7) mit zumindest dem ersten und dem zweiten Detektionsbereich aufweist,
wobei die Detektionseinheit (7) lösbar an der Grundeinheit (1) anordenbar ist, insbesondere mittels zumindest eines Befestigungselementes, bevorzugt einer Nut und/oder eines Rastelementes.

12. Vorrichtung nach einem der Ansprüche 5 bis 11,
**dadurch gekennzeichnet,**
**dass** die Vorrichtung eine Anzeigeeinheit aufweist, welche mit der Auswerteeinheit (3) zusammenwirkend ausgebildet ist, um ein Auswerteergebnis der Auswerteeinheit (3) anzuzeigen, insbesondere mittels zumindest eines optischen Leuchtmittels (4a, 4b).

13. Vorrichtung nach einem der vorangegangenen Ansprüche,
**dadurch gekennzeichnet,**
**dass** die Vorrichtung mehr als zwei Detektionsbereiche (9a, 9b, 9c, 9d) mit jeweils einem in eine Trägermatrix eingebetteten sensitiven Farbstoff aufweist, wobei die sensitiven Farbstoffe paarweise unterschiedlich sind, insbesondere, dass die Vorrichtung zumindest vier Detektionsbereiche (9a, 9b, 9c, 9d) aufweist.

14. Verfahren zur Detektion von Schimmelpilzbefall mit den
Verfahrensschritten
A. Bereitstellen zumindest eines ersten Detektionsbereichs mit einem ersten sensitiven Farbstoff und eines zweiten Detektionsbereichs mit einem zu dem ersten Farbstoff verschiedenen zweiten sensitiven Farbstoff, wobei der erste Farbstoff ausgebildet ist, seine Farbe abhängig von einer Zielgaskonzentration eines ersten Zielgases zu ändern und der zweite Farbstoff ausgebildet ist, seine Farbe abhängig von der Zielgaskonzentration eines zweiten, zu dem ersten Zielgas unterschiedlichen Zielgases und/oder einer Änderung des pH-Wertes zu ändern und
B. Analyse einer Farbänderung des ersten und des zweiten Farbstoffes.

15. Verwendung von zumindest zwei unterschiedlichen sensitiven Farbstoffen zur Detektion von Schimmelpilzbefall.

## Geänderte Patentansprüche

### Geänderte Patentansprüche gemäss Regel 137(2) EPÜ.

1. Vorrichtung zur Detektion von Schimmelpilzbefall,
mit einer Detektionseinheit (7) mit zumindest einem ersten Detektionsbereich (9a, 9b, 9c, 9d) mit einem ersten sensitiven Farbstoff und einem zweiten Detektionsbereich (9a, 9b, 9c, 9d) mit einem zu dem ersten Farbstoff verschiedenen zweiten sensitiven Farbstoff,
wobei erster und zweiter Farbstoff jeweils in eine Trägermatrix der Vorrichtung eingebettet sind, der erste Farbstoff ausgebildet ist, seine Farbe abhängig von einer Zielgaskonzentration eines ersten Zielgases zu ändern und der zweite Farbstoff ausgebildet ist, seine Farbe abhängig von der Zielgaskonzentration eines zweiten, zu dem ersten unterschiedlichen Zielgases und/oder einer Änderung des pH-Wertes zu ändern,
wobei die Vorrichtung zumindest einen optischen Sensor zur Detektion einer Farbänderung des ersten und/oder zweiten Farbstoffs aufweist, **dadurch gekennzeichnet,**
**dass** die Vorrichtung eine Grundeinheit (1) aufweist, mit dem zumindest einen optischen Sensor und mit einer Auswerteeinheit (3),
**dass** die Auswerteeinheit (3) mit dem optischen Sensor zur Auswertung von Messdaten des optischen Sensors zur Detektion eines Schimmelpilzbefalls zusammenwirkend ausgebildet ist, und
**dass** die Detektionseinheit (7) mittels zumindest eines Befestigungselementes lösbar an der Grundeinheit (1) anordenbar ist.

2. Vorrichtung nach Anspruch 1,
**dadurch gekennzeichnet,**
**dass** erster und zweiter Farbstoff zur Detektion einer Änderung von zwei verschiedenen Parametern aus der Gruppe
- Gaskonzentration Formaldehyd;
- Gaskonzentration Dimethylsulfid;
- Gaskonzentration Ethanol;
- pH-Wert
ausgebildet sind, insbesondere,
**dass** erster und zweiter Farbstoff zwei unterschiedlichen aus den nachfolgenden Stoffgruppen angehören:
- gassensitive Farbstoffe aus der Gruppe der Naphthaline, insbesondere zur Detektion einer Änderung der Gaskonzentration von Formaldehyd;
- gassensitive Farbstoffe aus der Gruppe der Metallsalze, insbesondere zur Detektion einer Änderung der Gaskonzentration von Dimethylsulfid;
- gassensitive Farbstoffe aus der Gruppe der Übergangsmetallkomplexe, insbesondere zur Detektion einer Änderung der Gaskonzentration von Ethanol;
- pH-sensitive Farbstoffe, insbesondere zur Detektion einer Änderung des pH-Wertes des Farbstoffs.

3. Vorrichtung nach einem der vorangegangenen Ansprüchen,
**dadurch gekennzeichnet,**
**dass** zumindest ein Detektionsbereich (9a, 9b, 9c, 9d) einen Nährboden für Schimmelpilz-Lebendkeime aufweist, insbesondere eine Agar-Schicht, bevorzugt eine DG18-Agar-Schicht und/oder Malzextrakt-Agar-Schicht aufweist, bevorzugt,
**dass** dieser Detektionsbereich zur Detektion einer Änderung des pH-Wertes mit einem pH-Wert-sensitiven Farbstoff eingefärbt ist.

4. Vorrichtung nach einem der vorangegangenen Ansprüche,
**dadurch gekennzeichnet,**
**dass** erster und/oder zweiter Detektionsbereich (9a, 9b, 9c, 9d), bevorzugt beide Detektionsbereiche (9a, 9b, 9c, 9d) zur optischen Transmissionsmessung ausgebildet sind, insbesondere eine optisch transparente Trägermatrix aufweisen.

5. Vorrichtung nach einem der vorangegangenen Ansprüche,
**dadurch gekennzeichnet,**
**dass** die Vorrichtung für jeden der beiden Detektionsbereiche (9a, 9b, 9c, 9d) einen separaten optischen Sensor aufweist.

6. Vorrichtung nach einem der vorangegangenen Ansprüche,
**dadurch gekennzeichnet,**
**dass** der optische Sensor zur Spektralanalyse ausgebildet ist, insbesondere als mehrkanaliger Farbsensor, bevorzugt als RGB-Farbsensor ausgebildet ist.

7. Vorrichtung nach einem der vorangegangenen Ansprüche,
**dadurch gekennzeichnet**
**dass** die Vorrichtung zumindest einen Referenzbereich aufweist, welcher derart angeordnet und mit dem optischen Sensor zusammenwirkend ausgebildet ist, dass den Referenzbereich durchdringende Lichtstrahlen auf den optischen Sensor auftreffen.

8. Vorrichtung nach Anspruch 7,
**dadurch gekennzeichnet,**
**dass** der Referenzbereich keinen Farbstoff oder einen nicht sensitiven Farbstoff aufweist, insbesondere, dass der Referenzbereich die gleiche Trägermatrix wie zumindest einer der Detektionsbereiche (9a, 9b, 9c, 9d) aufweist.

9. Vorrichtung nach einem der vorangegangen Ansprüche,
**dadurch gekennzeichnet,**
**dass** die Vorrichtung zumindest einen Feuchtesensor (10), insbesondere einen Feuchtedetektionsbereich mit einem feuchtesensitiven Farbstoff und/oder zumindest einen Temperatursensor (11), insbesondere einen Temperaturdetektionsbereich mit einem temperatursensitiven Farbstoff aufweist.

10. Vorrichtung nach einem der vorangegangenen Ansprüche 1 bis 9,
**dadurch gekennzeichnet,**
**dass** die Grundeinheit (1) eine Energiequelle (5) für zumindest die Auswerteeinheit (3) aufweist.

11. Vorrichtung nach einem der Ansprüche 1 bis 10, **dadurch gekennzeichnet, dass** die Detektionseinheit (7) lösbar an der Grundeinheit (1) anordenbar ist mittels einer Nut und/oder eines Rastelementes.

12. Vorrichtung nach einem der Ansprüche 1 bis 11,
**dadurch gekennzeichnet,**
**dass** die Vorrichtung eine Anzeigeeinheit aufweist, welche mit der Auswerteeinheit (3) zusammenwirkend ausgebildet ist, um ein Auswerteergebnis der Auswerteeinheit (3) anzuzeigen, insbesondere mittels zumindest eines optischen Leuchtmittels (4a, 4b).

13. Vorrichtung nach einem der vorangegangenen Ansprüche,
**dadurch gekennzeichnet,**
**dass** die Vorrichtung mehr als zwei Detektionsbereiche (9a, 9b, 9c, 9d) mit jeweils einem in eine Trägermatrix eingebetteten sensitiven Farbstoff aufweist, wobei die sensitiven Farbstoffe paarweise unterschiedlich sind, insbesondere, dass die Vorrichtung zumindest vier Detektionsbereiche (9a, 9b, 9c, 9d) aufweist.

14. Verfahren zur Detektion von Schimmelpilzbefall mit den Verfahrensschritten
A Bereitstellen einer Detektionseinheit (7) mit zumindest einem ersten Detektionsbereichs (9a, 9b, 9c, 9d) mit einem ersten sensitiven Farbstoff und einem zweiten Detektionsbereichs (9a, 9b, 9c, 9d) mit einem zu dem ersten Farbstoff verschiedenen zweiten sensitiven Farbstoff, wobei der erste Farbstoff ausgebildet ist, seine Farbe abhängig von einer Zielgaskonzentration eines ersten Zielgases zu ändern und der zweite Farbstoff ausgebildet ist, seine Farbe abhängig von der Zielgaskonzentration eines zweiten, zu dem ersten Zielgas unterschiedlichen Zielgases und/oder einer Änderung des pH-Wertes zu ändern,
Anordnen der Detektionseinheit (7) auf einer Grundeinheit (1), welche zumindest einen optischen Sensor und eine Auswerteeinheit (3) aufweist, wobei die Detektionseinheit (7) lösbar an der Grundeinheit (1) angeordnet ist, und
B Analyse einer Farbänderung des ersten und des zweiten Farbstoffes durch die Grundeinheit, wobei die Auswerteeinheit (3) mit dem optischen Sensor zur Auswertung von Messdaten des optischen Sensors zur Detektion eines Schimmelpilzbefalls zusammenwirkend ausgebildet ist.
